# EUROPÄISCHE PATENTSCHRIFT

(11) **EP 3 973 456 B1**
(45) Veröffentlichungstag und Bekanntmachung des Hinweises auf die Patenterteilung: **10.12.2025**
(21) Anmeldenummer: 20709199.2
(22) Anmeldetag: 09.03.2020
(51) Int. Cl.: G06N 3/082, G06N 3/045, G06N 3/084, G06N 3/0495, G06N 3/0499

(54) **REKURSIVE KOPPLUNG VON KÜNSTLICH LERNENDEN EINHEITEN**
RECURSIVE COUPLING OF ARTIFICIAL LEARNING UNITS
COUPLAGE RÉCURSIF D'UNITÉS À APPRENTISSAGE ARTIFICIEL

(30) Priorität: 21.05.2019 EP 19175786
(43) Veröffentlichungstag der Anmeldung: 30.03.2022
(73) Patentinhaber: Fraunhofer-Gesellschaft zur Förderung der angewandten Forschung e.V., 80686 München (DE); Universität des Saarlandes, 66123 Saarbrücken (DE)
(72) Erfinder: ZIMMERMANN, Heiko, 66280 Sulzbach (DE); FUHR, Günter, 13187 Berlin (DE); FUHR, Antonie, 14469 Potsdam (DE)
(74) Vertreter: Dehns Germany Partnerschaft mbB
(86) Internationale Anmeldenummer: PCT/EP2020/056271
(87) Internationale Veröffentlichungsnummer: WO 2020/233850

(56) Entgegenhaltungen:
- WO-A1-2018/208939
- GB-A- 2 336 227
- YAN ZHICHENG ET AL: "HD-CNN: Hierarchical Deep Convolutional Neural Networks for Large Scale Visual Recognition", 2015 IEEE INTERNATIONAL CONFERENCE ON COMPUTER VISION (ICCV), IEEE, 7 December 2015 (2015-12-07), pages 2740 - 2748, XP032866619, DOI: 10.1109/ICCV.2015.314

## Beschreibung

Die vorliegende Erfindung betrifft ein Verfahren aus mindestens zwei künstlich lernenden Einheiten.

### Stand der Technik

Künstliche Intelligenz spielt mittlerweile in unzähligen Anwendungsbereichen eine zunehmende Rolle. Darunter wird zunächst jede Automatisierung intelligenten Verhaltens und maschinelles Lernen verstanden. Jedoch sind derartige Systeme üblicherweise für Spezialaufgaben vorgesehen und trainiert. Diese Form künstlicher Intelligenz (KI, oder auch AI, artificial intelligence) wird häufig als "schwache KI" bezeichnet und beruht im wesentlichen auf der Anwendung von Berechnungen und Algorithmen zur Simulation intelligenten Verhaltens in einem fest bestimmten Bereich. Beispiele dafür sind Systeme, die in der Lage sind, bestimmte Muster zu erkennen, wie etwa Sicherheitssysteme in Fahrzeugen, oder die bestimmte Regeln erlernen und umsetzen können, wie etwa beim Schachspielen. Gleichzeitig sind diese Systeme in anderen Bereichen im Wesentlichen nutzlos und müssen für andere Anwendungen vollständig neu trainiert oder gar mit völlig anderen Ansätzen ausgebildet werden.

Zur praktischen Umsetzung derartiger künstlicher lernender Einheiten werden unter anderem neuronale Netze eingesetzt. Diese Netze bilden in ihrem Grundsatz die Funktionsweise biologischer Neuronen auf abstrakter Ebene nach. Dabei sind mehrere künstliche Neuronen oder Knoten vorhanden, die miteinander verbunden sind und Signale empfangen, verarbeiten und an andere Knoten übertragen können. Für jeden Knoten sind dann beispielsweise Funktionen, Gewichtungen und Schwellwerte festgelegt, die bestimmen, ob und in welcher Stärke ein Signal an einen Knoten weitergegeben wird.

Gewöhnlich werden die Knoten in Ebenen bzw. Schichten betrachtet, so dass jedes neuronale Netz zumindest eine Ausgabeschicht aufweist. Davor können weitere Schichten als sogenannte verborgene Schichten vorliegen, so dass ein mehrschichtiges Netz gebildet wird. Auch die Eingabewerte bzw. Features können als Schicht betrachtet werden. Die Verbindungen zwischen den Knoten der verschiedenen Schichten werden als Kanten bezeichnet, wobei diese üblicherweise mit einer festen Verarbeitungsrichtung belegt sind. Je nach Netztopologie kann festgelegt sein, welcher Knoten einer Schicht mit welchem Knoten der folgenden Schicht verknüpft ist. Dabei können alle Knoten verbunden sein, aber beispielsweise durch eine erlernte Gewichtung mit dem Wert 0 ein Signal nicht über einen bestimmten Knoten weiter verarbeitet werden.

Die Verarbeitung von Signalen im neuronalen Netz kann durch verschiedene Funktionen beschrieben werden. Im Folgenden wird dieses Prinzip an einem einzelnen Neuron bzw. Knoten eines neuronalen Netzes beschrieben. Aus den mehreren verschiedenen Eingabewerten, die einen Knoten erreichen, wird durch eine Propagierungsfunktion (auch Eingabefunktion) eine Netzeingabe (Netzinput) gebildet. Häufig umfasst diese Propagierungsfunktion eine einfache gewichtete Summe, wobei für jeden Eingabewert eine zugehörige Gewichtung vorgegeben ist. Grundsätzlich sind aber auch andere Propagierungsfunktionen möglich. Dabei können die Gewichtungen wᵢ als Gewichtsmatrix für das Netz vorgegeben sein.

Auf die so gebildete Netzeingabe eines Knotens wird eine Aktivierungsfunktion fₐₖₜ angewendet, die abhängig von einem Schwellwert sein kann. Diese Funktion stellt den Zusammenhang zwischen dem Netzinput und dem Aktivitätslevel eines Neurons dar. Es sind verschiedene Aktivierungsfunktionen bekannt, beispielsweise einfache binäre Schwellwertfunktionen, deren Ausgabe damit unterhalb des Schwellwerts Null ist und oberhalb des Schwellwerts die Identität; Sigmoidfunktionen; oder auch stückweise lineare Funktionen mit einer vorgegebenen Steigung. Diese Funktionen werden beim Design eines neuronalen Netzes festgelegt. Das Ergebnis der Aktivierungsfunktion fₐₖₜ bildet den Aktivierungszustand. Optional kann auch noch eine zusätzliche Outputfunktion fₒᵤₜ oder Ausgabefunktion vorgegeben sein, die auf die Ausgabe der Aktivierungsfunktion angewendet wird und den endgültigen Ausgabewert des Knotens festlegt. Häufig wird hier aber einfach das Ergebnis der Aktivierungsfunktion direkt als Ausgabewert weitergegeben, d.h. als Ausgabefunktion wird die Identität verwendet. Je nach verwendeter Nomenklatur können die Aktivierungsfunktion und die Ausgabefunktion auch als Transferfunktion fₜᵣₐₙₛ zusammengefasst werden.

Die Ausgabewerte jedes Knotens werden dann an die nächste Schicht des neuronalen Netzes als Eingabewerte für die jeweiligen Knoten der Schicht weitergegeben, wo die entsprechenden Schritte zur Verarbeitung mit den jeweiligen Funktionen und Gewichten des Knotens wiederholt werden. Je nach Topologie des Netzes können auch rückgerichtete Kanten zu vorherigen Schichten oder zurück in die ausgebende Schicht vorliegen, so dass ein rekurrentes Netz vorliegt.

Die Gewichtungen wᵢ, mit denen die Eingabewerte jeweils gewichtet werden, können dagegen vom Netz verändert werden und so die Ausgabewerte und Funktionsweise des gesamten Netzes anpassen, was als das "Lernen" eines neuronalen Netzes betrachtet wird.

Dazu wird üblicherweise eine Fehlerrückführung (Backpropagation) im Netz genutzt, d.h. ein Vergleich der Ausgabewerte mit Erwartungswerten und eine Nutzung des Vergleichs zur Anpassung der Eingabewerte mit dem Ziel der Fehlerminimierung. Durch Fehlerrückführung können dann verschiedene Parameter des Netzes entsprechend angepasst werden, beispielsweise die Schrittweite (Lernrate) oder die Gewichte der Eingabewerte an den Knoten. Ebenso können auch die Eingabewerte neu bewertet werden.

Die Netze können dann in einem Trainingsmodus trainiert werden. Entscheidend für die Einsatzmöglichkeiten eines neuronalen Netzes sind auch die verwendeten Lernstrategien. Dabei werden insbesondere die folgenden Varianten unterschieden:
Beim Überwachten Lernen (supervised learning) wird ein Eingangsmuster bzw. ein Trainingsdatensatz vorgegeben und die Ausgabe des Netzes mit dem erwarteten Wert verglichen.

Das Unüberwachte Lernen (unsupervised learning) überlässt das Finden der Zusammenhänge oder Regeln dem System, so dass also nur die zu lernenden Muster selbst vorgegeben werden. Eine Zwischenvariante ist das Teilüberwachte Lernen, bei dem auch Datensätze ohne vorgegebene Einordnungen verwendet werden können.

Beim Verstärkenden Lernen (reinforced learning) oder Q-Lernen wird ein Agent erzeugt, der Belohnungen und Bestrafungen für Aktionen erhalten kann, und der anhand dessen versucht, erhaltene Belohnungen zu maximieren und so sein Verhalten anzupassen.

Eine wesentliche Anwendung von neuronalen Netzen umfasst die Klassifikation von Eingabedaten bzw. Inputs in bestimmte Kategorien oder Klassen, also das Erkennen von Zusammenhängen und Zuordnungen. Dabei können die Klassen auf Basis bekannter Daten trainiert werden und zumindest teilweise vorgegeben sein, oder von einem Netz selbständig erarbeitet bzw. erlernt werden.

Die grundsätzliche Funktionsweise und weitere spezifische Details solcher neuronaler Netze sind im Fach bekannt, beispielsweise aus R. Schwaiger, J. Steinwender: Neuronale Netze programmieren mit Python, Rheinwerk Computing, Bonn 2019.

Ein universell einsetzbares AI-System, das also nicht auf nur eine Spezialaufgabe trainiert ist, würde zu hochdimensionalen Räumen führen und damit exponentiell ansteigende Trainings- und Test-Datensätze benötigen. Echtzeitreaktionen werden damit schnell unmöglich. Es wird daher generell versucht, die Dimensionalität und Komplexität solcher Systeme zu reduzieren. Dabei werden unterschiedliche Lösungsansätze verfolgt. Beispielsweise kann durch Verknüpfen von Datensätzen, Reduzierung der Freiheitsgrade und/oder durch die Einspeisung von bekanntem Wissen in ein System die Komplexität verringert werden. Als anderer Ansatz können korrelierte Daten bzw. voneinander abhängige Datensätze zumindest teilweise getrennt werden, beispielsweise durch Methoden wie die Hauptkomponentenanalyse (Principal Component Analysis). Durch Anwendung von Filtermethoden auf die Merkmale können Daten eliminiert werden, die beim Training eines Netzes nicht oder negativ auffallen, z.B. durch Anwendung von statistischen Tests wie dem Chi-Quadrat-Test oder anderen. Schließlich kann auch die Auswahl der Trainingsdaten selbst als Optimierungsproblem in einem AI-Netz erfolgen. Dabei werden die Trainingsdaten so kombiniert, dass sie möglichst schnell und gut ein neues Netzwerk trainieren können.

Weiterführende Ansätze umfassen unter anderem sogenannte "Convolutional Neural Networks", die in mindestens einer Schicht eines mehrschichtigen vollständig verbundenen Netzes anstelle einfacher Matrixtransformationen Faltungen anwenden. Dafür ist beispielsweise die sogenannte "Deep-Dream"-Methode insbesondere im Bereich der Bilderkennung bekannt, bei der in einem trainierten Netz die Gewichte optimal belassen werden, aber stattdessen die Eingangswerte (z.B. ein Eingangsbild) als Rückkopplungsschleife abhängig von Ausgabewert modifiziert werden. Damit wird beispielsweise das eingeblendet, was das System zu identifizieren glaubt. Der Name bezieht sich darauf, dass dabei traumartige Bilder entstehen. Auf diese Weise können interne Prozesse des neuronalen Netzes und ihre Richtung nachverfolgt werden.

Dabei ist ersichtlich, dass diese Methoden immer noch große Unterschiede zur menschlichen Intelligenz aufweisen. Zwar können die Datenbanken, Textdateien, Bilder und Audiodateien grundsätzlich damit verglichen werden, wie auch im Gehirn Fakten, Sprache, Sprachlogik, Geräusche, Bilder und Ereignisabläufe abgespeichert und verarbeitet werden; jedoch unterscheidet sich die menschliche Intelligenz beispielsweise wesentlich dadurch, dass sie all diese Daten im Zusammenhang mit Gefühlen und unbewussten "weichen" Kategorisierungen verknüpft.

Als nächstkommender Stand der Technik wird Druckschrift YAN ZHICHENG ET AL: "HD-CNN: Hierarchical Deep Convolutional Neural Networks for Large Scale Recognition", 2015 IEEE INTERNATIONAL CONFERENCE ON COMPUTER VISION (ICCV), IEEE, 7. Dezember 2015 (2015-12-07), Seiten 2740-2748, XP032866619, DOI: 10.1109/ICCV.2015.314 angesehen.

Weiterer relevanter Stand der Technik ist aus der WO 2018/208939 A1 und der GB 2 336 227 A bekannt.

### Offenbarung der Erfindung

Erfindungsgemäß wird ein Verfahren in einem System aus mindestens zwei künstlich lernenden Einheiten mit den Merkmalen des unabhängigen Patentanspruchs vorgeschlagen. Vorteilhafte Ausgestaltungen sind Gegenstand der Unteransprüche sowie der nachfolgenden Beschreibung.

Da Verfahren umfasst das Eingeben von Eingabewerten an mindestens eine erste künstlich lernende Einheit und eine zweite künstlich lernende Einheit umfasst, worauf ersten Ausgabewerte der ersten künstlich lernenden Einheit erhalten werden. Auf Grundlage der Ausgabewerte der ersten künstlich lernenden Einheit werden eine oder mehrere Modulationsfunktionen gebildet, welche dann auf einen oder mehrere Parameter der zweiten künstlich lernenden Einheit angewendet werden. Dabei handelt es sich bei dem einen oder mehreren Parameter um Parameter, welche die Verarbeitung von Eingabewerten und das Gewinnen von Ausgabewerten in der zweiten künstlich lernenden Einheit auf irgendeine Weise beeinflussen. Außerdem werden Ausgabewerte der zweiten künstlich lernenden Einheit erhalten. Diese können beispielsweise modulierte Ausgabewerte der zweiten Einheit darstellen.

Auf diese Weise werden zwei künstlich lernende Einheiten miteinander gekoppelt, ohne eine direkte Rückkopplung der Eingabe- oder Ausgabewerte zu verwenden. Stattdessen wird eine der Einheiten genutzt, um die Funktion der zweiten Einheit durch Modulation bestimmter funktionsrelevanter Parameter zu beeinflussen, so dass eine neuartige Kopplung entsteht, die zu anderen Ergebnissen bzw. Ausgabewerten führt als in herkömmlichen lernenden Einheiten. Darüber hinaus kann durch die Bearbeitung von Eingabewerten in zwei gekoppelten Einheiten ein Ergebnis in kürzerer Zeit bzw. mit einer tiefergehenden Analyse als in herkömmlichen Systemen erreicht werden, so dass die Effizienz insgesamt gesteigert werden kann. Insbesondere erfolgt eine rasche Klassifizierung des anstehenden Problems und Berücksichtigung schneller Veränderungen.

Erfindungsgemäßumfasst mindestens eine der künstlich lernenden Einheiten ein neuronales Netz mit einer Vielzahl von Knoten umfassen, insbesondere eine der lernenden Einheiten, auf die die Modulationsfunktionen angewendet werden. In diesem Fall können die ein oder mehreren Parameter mindestens eines der folgenden sein: eine Gewichtung für einen Knoten des neuronalen Netzes, eine Aktivierungsfunktion eines Knotens, eine Ausgabefunktion eines Knotens, eine Propagierungsfunktion eines Knotens. Dabei handelt es sich um wesentliche Bestandteile eines neuronalen Netzes, die die Verarbeitung von Daten in dem Netz festlegen. Anstelle einer Festlegung neuer Gewichtungen oder Funktionen für die Knoten kann durch die Modulationsfunktion eine Überlagerung vorhandener, selbstgelernter und/oder vordefinierter Funktionen des modulierten Netzes erreicht werden, die in Abhängigkeit von den Ergebnissen der ersten künstlich lernenden Einheit ist. Dabei kann diese Anwendung von Modulationsfunktionen insbesondere auch außerhalb einer Trainingsphase der Netze erfolgen und damit eine aktive Kopplung von zwei oder mehr Netzen bei der Verarbeitung von Eingabewerten erreichen.

Gemäß einer beispielhaften Ausführungsform kann jeder der künstlich lernenden Einheiten ein Klassifikationsspeicher zugeordnet sein, wobei jede der künstlich lernenden Einheiten eine Einordnung der Eingabewerte in ein oder mehrere Klassen vornimmt, welche in dem Klassifikationsspeicher gespeichert sind, wobei die Klassen jeweils in einer oder mehreren abhängigen Ebenen strukturiert sind, und wobei eine Anzahl der Klassen und/oder der Ebenen in einem ersten Klassifikationsspeicher der ersten künstlich lernenden Einheit geringer ist als eine Anzahl der Klassen und/oder der Ebenen in einem zweiten Klassifikationsspeicher der zweiten künstlich lernenden Einheit. Indem die Klassifikationsspeicher von zwei gekoppelten künstlich lernenden Einheiten auf diese Weise asymmetrisch gestaltet werden, kann eine parallele oder auch zeitabhängig wechselnde Bewertung der Eingabewerte mit unterschiedlicher Zielsetzung stattfinden, z.B. eine Kombination aus einer schnellen Klassifizierung der Eingabewerte und einer tiefgehenden, langsameren Analyse der Eingabewerte.

Alternativ oder zusätzlich zu der asymmetrischen Ausführung der Klassifikationsspeicher kann auch die Komplexität der ersten und zweiten künstlich lernenden Einheiten unterschiedlich gestaltet werden, so dass beispielsweise eine erste künstlich lernende Einheit einen deutlich geringeren Komplexitätsgrad aufweist als eine zweite künstlich lernende Einheit. Dabei kann für den Fall neuronaler Netze beispielsweise ein erstes neuronales Netz wesentlich weniger Knoten und/oder Schichten und/oder Kanten aufweisen als ein zweites neuronales Netz.

In einer möglichen Ausführungsform kann das Anwenden der mindestens einen Modulationsfunktion eine zeitabhängige Überlagerung von Parametern der zweiten künstlich lernenden Einheit bewirken, wobei die mindestens eine Modulationsfunktion eines der folgenden Merkmale umfassen kann: eine periodische Funktion, eine Stufenfunktion, eine Funktion mit kurzzeitig erhöhten Amplituden, eine gedämpfte Schwingungsfunktion, eine Schwebungsfunktion als Überlagerung mehrerer periodischer Funktionen, eine stetig zunehmende Funktion, eine stetig abnehmende Funktion. Ebenso sind Kombinationen oder zeitliche Abfolgen solcher Funktionen denkbar. Auf diese Weise können relevante Parameter einer lernenden Einheit zeitabhängig überlagert werden, so dass beispielsweise die Ausgabewerte aufgrund der Modulation in Suchräume "springen", die ohne die Überlagerung nicht erreicht würden.

Die zweite künstlich lernende Einheit umfasst ein zweites neuronales Netz mit einer Vielzahl von Knoten, wobei insbesondere das Anwenden der mindestens einen Modulationsfunktion eine Deaktivierung von mindestens einem Teil der Knoten bewirkt. Diese Art der Deaktivierung kann auch als "Dropout" auf Grundlage der Ausgabewerte der ersten künstlich lernenden Einheit betrachtet werden und kann ebenfalls für neu erschlossene Suchbereiche in den Klassifikationen sowie für einen verringerten Rechenaufwand und damit eine beschleunigte Durchführung des Verfahrens sorgen.

Das Verfahren umfasst das Festlegen einer aktuell dominierenden künstlich lernenden Einheit in dem System umfassen, sowie das Bilden von Gesamtausgabewerten des Systems aus den Ausgabewerten der aktuell dominierenden Einheit. Auf diese Weise können die zwei oder mehr Netze in dem System sinnvoll gekoppelt und synchronisiert werden.

Dabei kann beispielsweise die erste künstlich lernende Einheit mindestens so lange als dominierende Einheit festgelegt werden, bis ein oder mehrere Ausgabewerte der zweiten künstlich lernenden Einheit vorliegen. Auf diese Weise kann sichergestellt werden, dass das System zu jeder Zeit entscheidungssicher ist, also zu jeder Zeit (nach einem ersten Durchlauf der ersten lernenden Einheit) eine Reaktion des Systems möglich ist, auch bevor eine vollständige Einordnung der Eingabewerte durch alle vorhandenen künstlich lernenden Einheiten des Systems vorgenommen wurde.

Es ist dabei auch möglich, weiter einen Vergleich der derzeitigen Eingabewerte mit vorherigen Eingabewerten durch mindestens eine der künstlichen lernenden Einheiten des Systems anzuwenden, wobei, falls der Vergleich eine Abweichung ergibt, die über einem vorgegebenen Eingabe-Schwellwert liegt, die erste künstlich lernende Einheit als dominierende Einheit festgelegt wird. Auf diese Weise kann dafür gesorgt werden, dass auf wesentlich veränderte Eingabewerte (z.B. Erfassen einer neuen Situation durch Sensoren) sofort mit einer neuen Bewertung der Eingabewerte reagiert wird.

Zusätzlich oder alternativ kann weiter ein Vergleich von derzeitigen Ausgabewerten der ersten künstlich lernenden Einheit mit vorherigen Ausgabewerten der ersten künstlichen Einheit vorgenommen werden, wobei, falls der Vergleich eine Abweichung ergibt, die über einem vorgegebenen Ausgabe-Schwellwert liegt, die erste künstlich lernende Einheit als dominierende Einheit festgelegt wird. Durch Bewertung von Abweichungen in den Ausgabewerten, beispielsweise bei Vorliegen abweichender Klassen als Ergebnis im Vergleich zu einem früheren Durchlauf, können damit ebenfalls indirekt Veränderungen der Eingabewerte erkannt werden, die eine gewisse Signifikanz aufweisen und damit eine neue Klassifizierung sinnvoll machen.

Das System kann in gewissen Ausführungsformen weiter einen Timer umfassen, in dem ein oder mehrere vorgegebene Zeitspannen gespeichert sind, die einer oder mehreren der künstlich lernenden Einheiten zugeordnet sind, wobei der Timer dazu eingerichtet ist, für jeweils eine der künstlich lernenden Einheiten den Ablauf der dieser Einheit zugeordneten vorgegebenen Zeitspanne zu messen. Ein derartiges Element bildet eine Möglichkeit, die unterschiedlichen Einheiten eines Systems beispielsweise zu synchronisieren und zu steuern, wann Ausgabewerte einer bestimmten Einheit erwartet oder weiterverarbeitet werden. Damit kann durch einen Timer eine einstellbare Latenzzeit des Gesamtsystems definiert werden, innerhalb derer eine Entscheidung als Gesamtausgabewert des Systems vorliegen soll. Diese Zeit kann beispielsweise wenige ms betragen, z.B. 30 oder 50 ms, und kann unter anderem abhängig von der vorhandenen Topologie der künstlich lernenden Einheiten und den vorliegenden Recheneinheiten (Prozessoren oder andere Datenverarbeitungsmittel) sein.

Dabei kann beispielsweise das Messen der zugeordneten vorgegebenen Zeitspanne für eine der künstlich lernenden Einheiten gestartet werden, sobald diese künstlich lernende Einheit als dominierende Einheit festgelegt wird. Auf diese Weise kann sichergestellt werden, dass eine Einheit innerhalb einer vorgegebenen Zeit eine Lösung erarbeitet oder optional die Datenverarbeitung sogar abgebrochen wird.

In einer möglichen Ausführungsform kann die zweite künstlich lernende Einheit als dominierende Einheit festgelegt werden, falls eine für die erste künstlich lernende Einheit vorgegebene erste Zeitspanne in dem Timer abgelaufen ist. Dies sorgt dafür, dass bereits vor der Analyse der Eingabewerte durch weitere künstlich lernende Einheiten eine Reaktion auf Grundlage der ersten künstlichen Einheit möglich ist, während anschließend die Daten detaillierter durch die zweite Einheit ausgewertet werden.

Es ist offenbart dass die Eingabewerte beispielsweise eines oder mehrere der folgenden umfassen können: durch einen oder mehrere Sensoren erfasste Messwerte, durch eine Benutzerschnittstelle erfasste Daten, aus einem Speicher abgerufene Daten, über eine Kommunikationsschnittstelle empfangene Daten, von einer Recheneinheit ausgegebene Daten. Es kann sich also z.B. um von einer Kamera erfasste Bilddaten, um Audiodaten, um Positionsdaten, um physikalische Messwerte wie Geschwindigkeiten, Abstandsmesswerte, Widerstandswerte und allgemein jeden beliebigen Wert handeln, der von einem geeigneten Sensor erfasst wird. Ebenso können Daten von einem Benutzer über eine Tastatur oder einen Bildschirm eingegeben oder ausgewählt werden und optional auch mit anderen Daten wie etwa Sensordaten verknüpft werden. Erfindungsgemäß umfassen die Eingabewerte Sensorwerteund/oder Audiodaten und/oder Bilddaten.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung beschrieben.

### Figurenbeschreibung

Figur 1 zeigt eine Kombination aus zwei miteinander gekoppelten künstlich lernenden Einheiten;
Figur 2 zeigt schematisch verschiedene beispielhafte Modulationsfunktionen;
Figur 3 veranschaulicht die Anwendung eines Dropout-Verfahrens in zwei gekoppelten neuronalen Netzen gemäß einer Ausführungsform;
Figur 4 zeigt ein System wie in Figur 1 mit einem zusätzlichen Timer;
Figur 5 stellt schematisch ein System wie in Figur 1 mit den zugeordneten Klassifikationsspeichern dar; und
Figur 6 zeigt ein alternatives System mit drei gekoppelten künstlich lernenden Einheiten.

### Detaillierte Beschreibung von Ausführungsformen

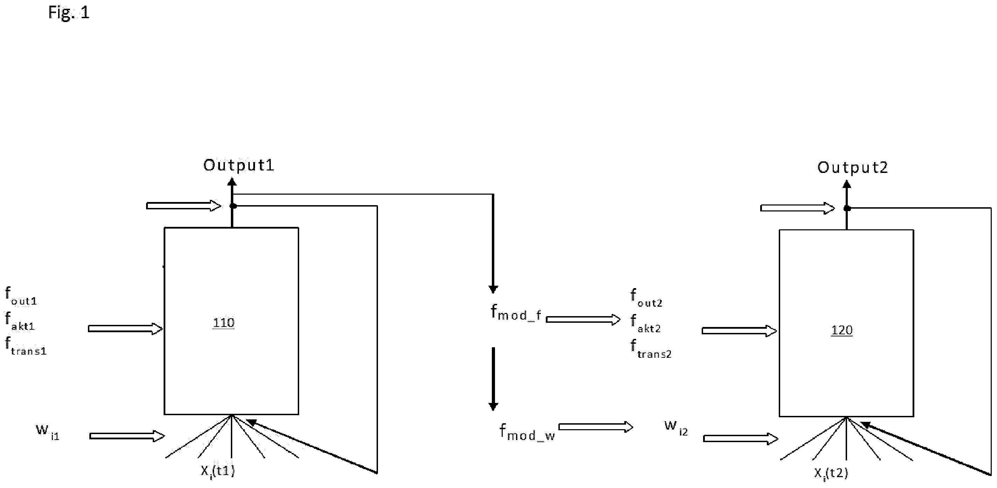

Figur 1 zeigt eine beispielhafte Ausführungsform mit zwei verknüpften künstlich lernenden Einheiten 110, 120, die im Folgenden genauer beschrieben wird. Die künstlich lernenden Einheiten sind in den folgenden Erläuterungen beispielhaft als neuronale Netze ausgebildet.

Dabei ist eine erste künstlich lernende Einheit, hier in Form eines ersten neuronalen Netzes 110 vorgesehen, das im Wesentlichen dazu dienen kann, die Eingangssignale Xᵢ zu kategorisieren und mit dem Ergebnis dieser Kategorisierung eine zweite künstlich lernende Einheit 120, hier ein zweites neuronales Netz, zu beeinflussen. Dabei werden die Ergebnisse des ersten neuronalen Netzes bevorzugt nicht als Eingangswerte für das zweite neuronale Netz genutzt, sondern zur Beeinflussung von vorhandenen Gewichtungen, Schrittweiten und Funktionen des Netzes. Insbesondere können diese Parameter des zweiten neuronalen Netzes so beeinflusst werden, dass sie nicht vollständig neu festgelegt werden, sondern die ursprünglichen Parameter des zweiten Netzes 120 auf Grundlage der Ausgangssignale des ersten neuronalen Netzes 110 moduliert bzw. überlagert werden. Dies bedeutet, dass die beiden neuronalen Netze ansonsten bevorzugt eigenständig arbeiten, z.B. ihre Grundwerte selbst trainieren, und dabei aber durch eine Überlagerung gekoppelt sein können. Dabei können die beiden neuronalen Netze im Wesentlichen ähnlich zueinander gestaltet sein, aber beispielsweise mit deutlich unterschiedlichen Komplexitätsgraden, wie etwa der Anzahl der vorhandenen Schichten und Klassifizierungen. Weiter besitzt jedes der neuronalen Netze seinen eigenen Speicher.

In einer möglichen Ausführungsform kann dabei das erste neuronale Netz 110 als kategorisierendes Netz genutzt werden, das dazu dient, die Eingabewerte grob und schnell zu kategorisieren, während dann auf dieser Grundlage des Kategorisierungsergebnisses durch Modulation von Parametern des zweiten Netzes dieses entsprechend beeinflusst wird. Zu diesem Zweck kann als erstes neuronales Netz ein Netz mit vergleichsweise wenigen Ebenen vorgesehen sein, das einen Speicher mit wenigen Klassen K₁, K₂, ...Kₙ aufweist, die bevorzugt stark abstrahiert sind, um eine grobe Einordnung zu erreichen. Beispielsweise könnte dieses erste neuronale Netz auf 10, 50, 100 oder 500 Klassen beschränkt sein, wobei diese Zahlen selbstverständlich nur als grobe Beispiele zu verstehen sind. Dabei kann das Training des ersten neuronalen Netzes insbesondere einzeln und unabhängig von weiteren gekoppelten neuronalen Netzen erfolgen. Zusätzlich oder alternativ kann aber auch eine Trainingsphase in einem gekoppelten Zustand mit einem oder mehreren gekoppelten neuronalen Netzen genutzt werden.

Das erste neuronale Netz soll damit innerhalb einer kurzen Zeit eine verwertbare Ausgabe liefern, mit der das zweite neuronale Netz sinnvoll beeinflusst werden kann. Aus den Ausgabewerten *Output1* des ersten neuronalen Netzes 110 können Gewichte und Funktionen erzeugt werden, die den selbsterzeugten Gewichten und Funktionen des zweiten neuronalen Netzes 120 überlagert werden können. Dies bedeutet, dass das zweite neuronale Netz zunächst eigenständig funktioniert und die Ausgabewerte des ersten Netzes bzw. die daraus gewonnenen Parameter nicht vollständig übernimmt. Auch das zweite neuronale Netz 120 kann zunächst eigenständig auf übliche Weise trainiert werden und dadurch selbstgenerierte Gewichte aufweisen.

Dabei kann das zweite neuronale Netz deutlich komplexer als das erste neuronale Netz gestaltet sein und insbesondere mehr Ebenen und/oder Speicherklassen aufweisen. Der Grad, um den die Komplexität des zweiten Netzes gegenüber dem ersten Netz erhöht ist, kann dabei je nach Anwendungsfall unterschiedlich festgelegt sein. Die Eingabewerte bzw. Inputdaten für das zweite neuronale Netz sind dabei bevorzugt dieselben Eingabewerte wie für das erste neuronale Netz, so dass nun mit denselben Daten eine komplexere Analyse vorgenommen werden kann. Alternativ können aber zumindest teilweise auch Ausgabewerte des ersten neuronalen Netzes als Eingabewerte des zweiten Netzes verwendet werden. Insbesondere bei einer deutlich unterschiedlichen Komplexität des zweiten Netzes könnte beispielsweise ein zweites Netz vorgesehen sein, dem sowohl die ursprünglichen Eingabewerte, die auch für das erste Netz als Eingabewerte dienten, als Eingabewerte zugeführt werden, als auch zusätzlich die Ausgabewerte des ersten Netzes als Eingabewerte des zweiten Netzes verwendet werden.

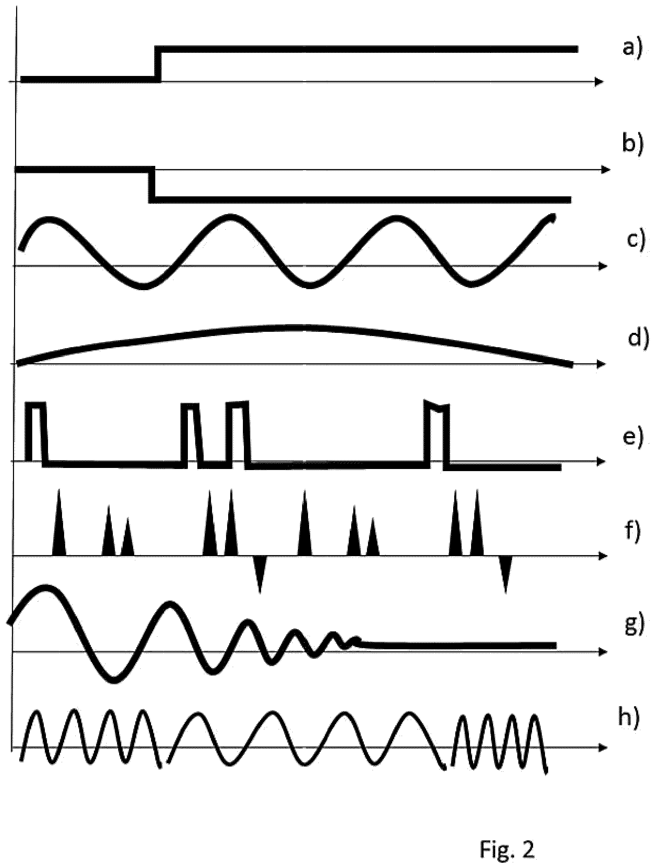

Figur 2 zeigt beispielhaft verschiedene Modulationsfunktionen f_{mod}, mit denen ein oder mehrere Parameter des zweiten neuronalen Netzes überlagert werden können. Dabei kann die Überlagerung bzw. Modulation grundsätzlich auf beliebige Weise stattfinden. Wenn eine Modulationsfunktion f_{mod_w} auf die Gewichtungen wᵢ₂ der Knoten angewendet wird, kann beispielsweise vorgesehen sein, dass die Gewichtungsmatrix des zweiten Netzes 120 als Argument der Modulationsfunktion eingesetzt wird, oder es können eindimensionale (auch unterschiedliche) Funktionen für jeden einzelnen der Gewichtungswerte wᵢ₂ vorgesehen sein. Wenn eine Modulationsfunktion f_{mod_f_} auf eine der beschreibenden Funktionen des zweiten neuronalen Netzes angewendet wird, also auf eine Transferfunktion fₜᵣₐₙₛ₂, eine Aktivierungsfunktion fₐₖₜ₂, eine Propagierungsfunktion oder eine Ausgabefunktion fₒᵤₜ₂ des Netzes 120, kann dies durch eine Verknüpfung der beiden Funktionen geschehen, wobei auch hier eine Modulationsfunktion f_{mod_f} entweder auf nur einen Teil oder alle relevanten beschreibenden Funktionen angewendet werden kann (z.B. auf alle Aktivierungsfunktionen fₐₖₜ₂ des zweiten neuronalen Netzes 120). Es können Modulationen gleichwertig an allen Knoten eines Netzes oder alternativ auch nur auf einen Teil der Knoten angewendet werden, oder für jeden Knoten anders moduliert werden. Ebenso kann beispielsweise für jede Schicht eines Netzes getrennt oder auf andere Weise gestaffelt moduliert werden.

Insbesondere können die Modulationsfunktionen f_{mod} auch zeitabhängige Funktionen sein, so dass die Gewichtungen wᵢ₂ oder Funktionen des zweiten neuronalen Netzes zeitabhängig geändert werden. Es sind aber ebenso statische Modulationsfunktionen zur Modulation des zweiten neuronalen Netzes denkbar. Dabei wird die Modulation auf die Parameter des zweiten Netzes 120 angewendet, die bereits ursprünglich für dieses zweite Netz definiert sind (wie etwa die Propagierungsfunktionen oder die Aktivierungsfunktionen), oder die in der Trainingsphase selbständig gewonnen wurden, wie etwa die angepassten selbstgenerierten Gewichte.

Als Beispiele dafür sind in Figur 2 acht verschiedene zeitabhängige Modulationsfunktionen dargestellt. Beispiel a) zeigt eine einfache binäre Stufenfunktion, bei der bis zu einer vorgegebenen Zeit der Wert null und anschließend ein Wert größer null vorgegeben ist. Dabei kann der zweite Wert grundsätzlich 1 sein, könnte aber auch einen anderen Wert aufweisen, so dass die ursprünglichen Parameter zusätzlich mit einem Faktor beaufschlagt werden. Auf diese Weise wird z.B. eine Gewichtung zeitabhängig ein- und abgeschaltet oder zeitabhängig verstärkt. Beispiel b) zeigt eine umgekehrte Situation, in der eine Stufenfunktion mit einem zweiten Wert kleiner als Null vorgegeben. Ebenso sind alternativ zu den Varianten aus Beispiel a) und b) Stufenfunktionen denkbar, die zwei verschiedene Werte ungleich 0 umfassen, so dass der Pegel entsprechend zeitabhängig angehoben oder abgesenkt wird.

Beispiel c) zeigt eine periodische Modulationsfunktion, die ebenfalls auf jeden beliebigen Parameter des zweiten Netzes angewendet werden kann und auf diese Weise zeitabhängig periodisch bestimmte Elemente verstärken oder abschwächen wird. Dabei könnten beispielsweise auch für unterschiedliche Knoten und/oder unterschiedliche Schichten jeweils verschiedene Amplituden und/oder Perioden für eine derartige Funktion gewählt werden. Jede beliebige periodische Funktion kann an dieser Stelle verwendet werden, etwa eine Sinus-Funktion oder auch nichtstetige Funktionen. Je nach Art der Verkettung der Funktionen mit den selbstgenerierten Funktionen des zweiten Netzes können nur positive oder auch negative Funktionswerte gewählt werden.

In Beispiel d) ist eine langsame kontinuierliche vorübergehende Anhebung und Absenkung des Pegels gezeigt. Beispiel e) dagegen beschreibt kurzzeitige, annähernd rechteckförmige hohe Pegel bei ansonsten niedrigem Funktionswert, der optional auch null sein kann. Ähnlich sind in Beispiel f) unregelmäßig verteilte und sehr kurze Spitzen oder Spikes zu sehen, die also für einen sehr kurzen Zeitraum eine Pegelerhöhung bewirken. Dabei weisen die Spitzen hier unterschiedliche Amplituden auf und können sowohl nach positive als auch negative Werte (relativ zum Grundwert) annehmen. Für die Varianten aus den Beispielen e) und f) können sowohl regelmäßige, periodische als auch zeitlich völlig unregelmäßige (z.B. stochastisch ermittelte) Verteilungen der Spitzen bzw. Verstärkungen vorliegen. Dabei können kurze Pegelerhöhungen beispielsweise etwa innerhalb der Zeit eines Entscheidungszyklus des zweiten neuronalen Netzes liegen, während länger ausgeprägte Pegelveränderungen sich über mehrere Entscheidungszyklen erstrecken können.

Beispiel g) in Figur 2 zeigt weiter eine gedämpfte Schwingung, die ebenfalls beliebig mit verschiedenen Dämpfungen und Amplituden ausgestaltet sein könnte. Schließlich ist in Beispiel h) eine zeitliche Abfolge aus unterschiedlichen Schwingungen um den Grundwert gezeigt, wobei sich hier insbesondere die Periodenlängen der Schwingungen unterscheiden, während die Amplitude gleich bleibt. Diese Kombination unterschiedlicher Schwingungen kann auch als additive Überlagerung, d.h. Schwebung ausgebildet sein.

Generell sind beliebige Modulationsfunktionen denkbar und die gezeigten Funktionen aus Figur 2 nur als Beispiel zu verstehen. Insbesondere sind beispielsweise beliebige Kombinationen der aufgeführten Beispielfunktionen möglich. Es versteht sich auch, dass die gezeigte Grundlinie in allen Beispielen je nach gewünschtem Effekt der Modulationsfunktion bei 0 oder bei einem anderen Grundwert verlaufen kann. Bei einer reinen Verkettung der Modulationsfunktion mit der jeweiligen modulierten Funktion kann mit einem Grundwert von 0 und entsprechenden Erhöhungen des Funktionswerts dafür gesorgt werden, dass der jeweilige Knoten nur zeitabhängig zur Verarbeitung beiträgt und zu anderen Zeiten abgeschaltet ist. Mit einem Grundwert von 1 kann dagegen erreicht werden, dass z.B. mit dem Beispiel aus Figur 2a) eine Modulationsfunktion, die auf die Gewichtungen angewendet wird, zunächst als Grundwert die selbstgenerierten Gewichte des modulierten Netzes wiedergibt und dann, ab dem abgestuften höheren Wert, entsprechend verstärkte Gewichte aufweist. Entsprechend wirkt eine derartige Funktion auch auf die Modulierung der Funktionen, wie etwa der Aktivierungsfunktion.

Wie bereits beschrieben, kann eine Modulationsfunktion auf Grundlage der Ausgabewerte einer ersten künstlich lernenden Einheit gebildet werden, also im vorliegenden Beispiel auf Grundlage des ersten neuronalen Netzes. Der Zusammenhang zwischen den Ausgabewerten und der daraus gebildeten Modulationsfunktion kann beliebig gestaltet werden. Beispielsweise kann dieser Zusammenhang mindestens zum Teil in einer gemeinsamen Trainingsphase des gekoppelten Netzes erzeugt werden. **In** anderen Ausführungsformen kann vorgegeben sein, wie die Abhängigkeit zwischen den Modulationsfunktionen und den Ausgabewerten des ersten Netzes gestaltet ist. Optional könnte auch entschieden werden, dass bei bestimmten Ausgabewerten zunächst keine Modulation des zweiten Netzes erfolgt.

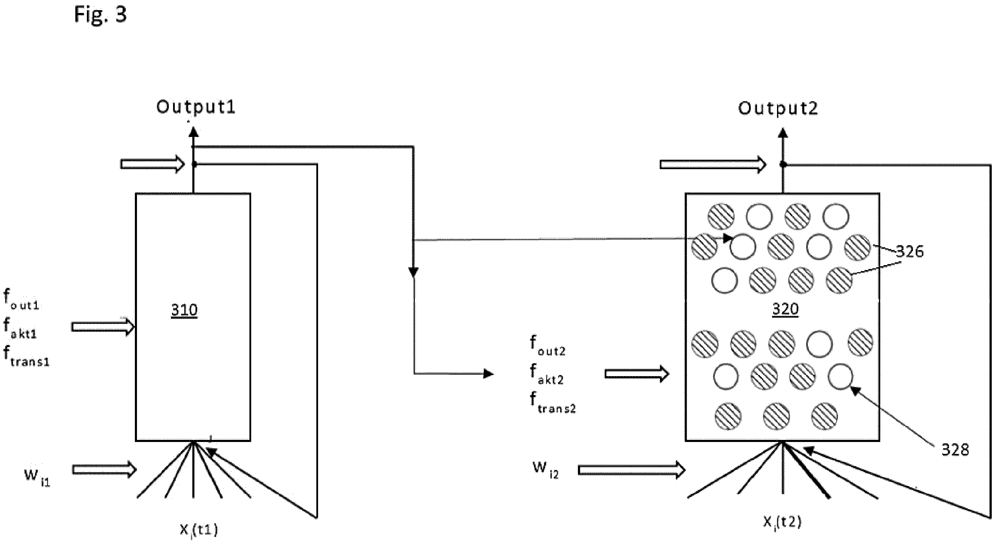

Alternativ oder zusätzlich zu der Anwendung von Modulationsfunktionen auf die Gewichte und Funktionen eines zweiten neuronalen Netzes kann auch ein gekoppeltes Dropout-Verfahren angewendet werden, das in Figur 3 dargestellt ist. Dabei handelt es sich herkömmlich um ein Trainingsverfahren für ein neuronales Netz, bei dem in jedem Trainingszyklus nur ein Teil der vorhandenen Neuronen in den verborgenen Schichten und der Eingangsschicht genutzt werden und die übrigen nicht verwendet werden ("drop out"). Zu diesem Zweck wird üblicherweise im Stand der Technik eine Dropout-Rate auf Grundlage der rückgeführten Fehler des Netzes festgelegt, die bestimmt, wie groß der Anteil der abgeschalteten Neuronen am gesamten Netz ist. Ebenso könnten anstelle von Neuronen ein Teil der Kanten bzw. Verbindungen zwischen Neuronen abgeschaltet werden.

Eine derartige teilweise Abschaltung von Neuronen und/oder Kanten kann nun in beispielhaften Ausführungsformen ebenfalls in einem zweiten neuronalen Netz eingesetzt werden, wobei nun die Dropout-Parameter nicht auf Grundlage der Fehlerrückführung des Netzes selbst, sondern wie bei der zeitabhängigen Modulation in Abhängigkeit von den Ausgabewerten eines ersten neuronalen Netzes eingesetzt werden. Dabei kann beispielsweise auf Grundlage der Ausgabewerte Output1 des ersten neuronalen Netzes 310 eine Dropout-Rate für das zweite neuronale Netz festgelegt werden, die dann auf das zweite Netz angewendet wird. Die Figur zeigt erneut zwei gekoppelte Netze 310, 320 wie in Figur 1, wobei nun die Neuronen bzw. Knoten 326, 328 des zweiten Netzes 320 schematisch als Kreise angedeutet sind. Dabei sind die verbindenden Kanten nicht gezeigt, und die Anordnung der dargestellten Neuronen soll keinen zwingenden Bezug zu ihrer tatsächlichen Topologie haben. Über die Dropout-Rate wird nun ein Teil der vorhandenen Neuronen deaktiviert und damit nicht verwendet. Die aktiven Neuronen 326 des zweiten Netzes sind in der Figur schraffiert dargestellt, während die nicht ausgefüllten Neuronen die Dropout-Neuronen 328 darstellen sollen.

Auf allgemeine Weise kann das hier beschriebene gekoppelte Dropout auch als Modulationsfunktion f_{mod} verstanden werden, indem als Modulationsfunktion für das Gewicht oder z.B. die Ausgabefunktion jedes einzelnen Knotens entweder 0 oder 1 eingesetzt wird. Dabei kann auf Grundlage der Ausgabewerte des ersten Netzes bestimmt werden, welche der Neuronen 326, 328 abgeschaltet werden, oder es kann nur die Rate vorgegeben werden und über stochastische Funktionen bestimmt werden, welches Neuron abgeschaltet wird. Auch die Dropout-Rate kann dabei wiederum auf Grundlage der Ausgabewerte Output1 des ersten Netzes 310 festgelegt werden. Dabei kann eine Dropout-Modulationsfunktion optional auch eine zeitabhängige Abschaltung bewirken, was z.B. einer Verkettung einer Dropout-Funktion mit einer wie in Figur 2 gezeigten Modulationsfunktion entsprechen würde. Ebenso kann auch eine Folge von Musterabschaltungen eingesetzt werden, die sich in einem vorherigen Training bewährt haben, so dass beispielsweise zyklische Mustervariationen zur Abschaltung in dem zweiten neuronalen Netz 320 eingesetzt werden.

Generell kann das Dropout dafür sorgen, dass die Arbeitsgeschwindigkeit eines neuronalen Netzes erhöht wird. Außerdem wird vermieden, dass sich benachbarte Neuronen in ihrem Verhalten zu sehr annähern. Das gekoppelte Dropout wie vorstehend beschrieben kann sowohl in einer gemeinsamen Trainingsphase eingesetzt werden, in der die beiden Netze gekoppelt sind, als auch in einem bereits trainierten Netz eingesetzt werden.

Um sicherzustellen, dass die gekoppelten neuronalen Netze sich sinnvoll ergänzen, kann festgelegt werden, welches der neuronalen Netze zu jedem Zeitpunkt das Gesamtsystem dominiert. Als dominierendes Netz bzw. Dominanz kann dabei das Netz bezeichnet werden, dessen Ausgabewerte die Ausgabe des Gesamtsystems bestimmen. Im Folgenden wird davon ausgegangen, dass immer nur genau ein Netz in einer Gruppe aus zwei oder mehr gekoppelten Netzen dominiert und damit die Ausgabe des dominierenden Netzes gleich der Ausgabe des Gesamtsystems ist. Andere Ausführungsformen sind jedoch auch grundsätzlich denkbar, so dass beispielsweise Vorschriften festgelegt sind, die bei mehr als einem dominierenden Netz eine Verarbeitung der Ausgabewerte der dominierenden Netze zu einem endgültigen Gesamtausgabewert beschreiben.

In beispielhaften Ausführungsformen kann zu diesem Zweck ein Timer bzw. Zeitglied implementiert werden, welches für eines oder mehrere der gekoppelten neuronalen Netze eine Zeitvorgabe festlegt. Dabei soll diese Zeitvorgabe bevorzugt als Maximalwert bzw. zeitliche Obergrenze verstanden werden, nach der ein Ausgabewert des jeweiligen Netzes vorliegen muss, so dass auch bereits früher eine Ausgabe vorliegen kann. Spätestens nach Ablauf der für ein bestimmtes Netz vorgegebenen Zeit wird dann ein Ausgabewert dieses Netzes ausgewertet. Der Timer kann auf Basis von festgelegten Zeitvorgaben damit die Dominanz zwischen den gekoppelten Netzen steuern und/oder verändern.

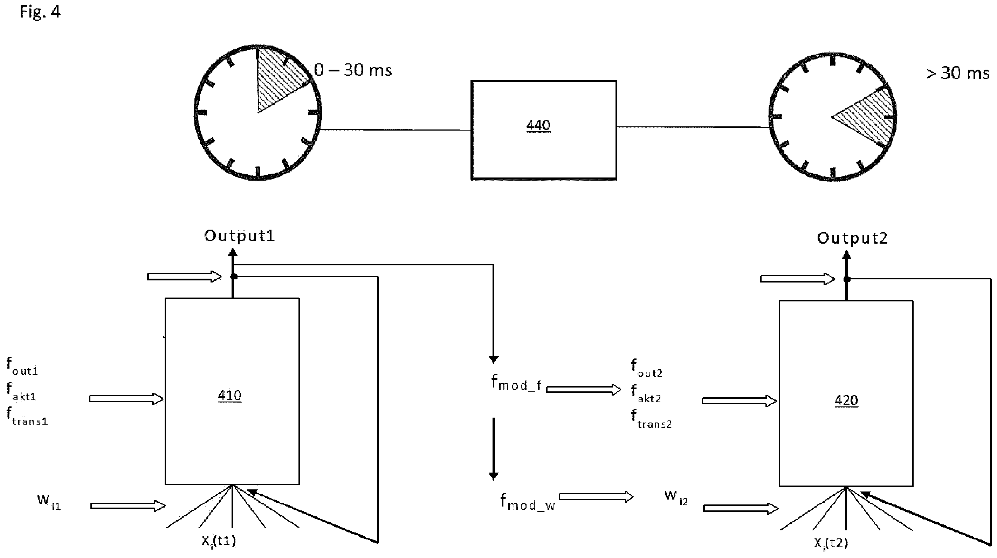

Eine beispielhafte Ausführungsform dieser Art ist in Figur 4 dargestellt. Dabei kann die Ausbildung und Kopplung der beiden neuronalen Netze 410, 420 dem bereits in Figur 1 beschriebenen Beispiel entsprechen. Der Timer 440 sorgt nun dafür, dass die Ausgabe des ersten neuronalen Netzes 410 spätestens nach einer vorgegebenen Zeit, die durch einen vorgegebenen Zeitparameterwert festgelegt ist, ausgewertet wird. Die benötigte Zeit kann beispielsweise ab Einspeisung der Eingangswerte Xᵢ in das jeweilige Netz gemessen werden. Die Wahl der vorgegebenen Zeitparameter für ein Netz kann dabei insbesondere abhängig von der Komplexität eines Netzes durchgeführt werden, so dass in der vorgegebenen Zeit auch tatsächlich verwertbare Ergebnisse zu erwarten sind. **In** einem Beispiel wie dem zuvor beschriebenen, bei dem das erste neuronale Netz 410 bevorzugt durch ein Netz mit wenigen verborgenen Schichten und einer geringen Anzahl von Klassifizierungen gebildet wird, kann damit auch eine entsprechend kurze Zeit für dieses erste Netz gewählt werden. Ebenso können bei der Wahl der Zeitparameter für ein Netz weitere Überlegungen einbezogen werden, etwa die vorhandene Hardware, welche die Rechenzeit der Netze entscheidend beeinflusst, und/oder auch das von den gekoppelten Netzen betrachtete Einsatzgebiet. Weiter können die vorgegebenen Zeitparameter variabel sein und beispielsweise in Abhängigkeit von Ergebnissen von mindestens einem der gekoppelten neuronalen Netze abgeändert oder neu festgelegt werden. Es versteht sich, dass eine derartige Zeitvorgabe zumindest die Zeitspanne umfassen sollte, die als Mindestzeit für das einmalige Durchlaufen des jeweiligen Netzes 410, 420 erforderlich ist. In Figur 4 ist als Beispiel eine Zeitspanne von 30ms für das erste Netz festgelegt, so dass bei einem Verfahrensdurchlauf dieses Netz in der Zeit von 0ms bis 30ms ab Beginn des Verfahrens dominiert. Es kann aber natürlich auch ein geeigneter anderer Wert für diese Zeitspanne gewählt werden.

Während der durch den Zeitparameter für das erste Netz 410 vorgegebenen Zeitspanne (hier 30ms) wird das erste neuronale Netz die Eingabewerte Xᵢ auf übliche Weise verarbeiten. Nach Ablauf der vorgegebenen Zeit können aus der Ausgabe Output1 des ersten neuronalen Netzes 410 Funktionen erzeugt werden, die zur Überlagerung bzw. Modulation der eigenen Gewichte und Funktionen des zweiten neuronalen Netzes dienen. Außerdem können die Ausgabewerte des ersten neuronalen Netzes auch alternativ oder zusätzlich zur Verwendung für die Beeinflussung des zweiten Netzes 420 eigenständig verarbeitet werden und beispielsweise als schnelle Ausgabe des Gesamtsystems genutzt werden.

Sobald die Modulationsfunktionen f_{mod_f}, f_{mod_w} auf das zweite neuronale Netz 420 angewendet wurden, kann der Timer 440eine erneute Zeitmessung starten und dabei nun einen zweiten, für das zweite neuronale Netz 420 vorgegebenen Zeitparameter anwenden.

Dabei kann das zweite neuronale Netz 420 optional auch bereits vor der Modulation durch die gewonnenen Modulationsfunktionen f_{mod_f}, f_{mod_w} selbständig die Eingabewerte Xᵢ verwerten, so dass beispielsweise die Eingabewerte bereits vor Start der zweiten vorgegebenen Zeitspanne auch an das zweite neuronale Netz 420 gegeben werden können und dort entsprechend verarbeitet werden können. Nach Ablauf der ersten Zeitspanne wird dann die Überlagerung der Parameterwerte und Funktionen des zweiten neuronalen Netzes vorgenommen, indem die entsprechenden Modulationsfunktionen f_{mod_f}, f_{mod_w} angewendet werden. Dabei können ein oder mehrere Modulationsfunktionen für unterschiedliche Teile des zweiten neuronalen Netzes 420 gebildet werden, beispielsweise für die Gewichtungen, Ausgabefunktionen, Propagierungsfunktionen und/oder Aktivierungsfunktionen des zweiten neuronalen Netzes. Bei einem zweiten neuronalen Netz 420, das deutlich komplexer als das erste neuronale Netz 410 ausgebildet ist, beispielsweise durch deutlich mehr Schichten und Knoten und/oder durch eine höhere Anzahl von Speicherklassen, wird das zweite neuronale Netz einen im Vergleich höheren Rechenaufwand und damit auch mehr Zeit benötigen, so dass in diesem Fall die zweite Zeitspanne entsprechend länger gewählt werden kann.

Dabei kann optional jedes der Netze 410, 420 kontinuierlich weiter die Eingabewerte verarbeiten und auswerten, auch während ein anderes Netz aufgrund der laufenden Zeitspannen als dominierendes Netz im Gesamtsystem festgelegt ist. Insbesondere kann in dem gezeigten Beispiel aus zwei gekoppelten Netzen das erste Netz kontinuierlich die Eingabewerte auswerten, auch während die Dominanz beim zweiten Netz liegt und die Ausgabewerte des Gesamtsystems daher nach Ablauf der zweiten Zeitspanne und nach einer durch das zweite Netz gefundenen Lösung den Ausgabewerten des zweiten Netzes entsprechen. Auf diese Weise kann ein schnell kategorisierendes Netz wie das hier beschriebene erste Netz 410, das durchgängig die vorhandenen Eingabewerte auswertet, auch kurzfristige Eingriffe vornehmen, soweit die gefundenen Ausgabewerte Eingang in die Gesamtausgabe finden. Solche Ausführungsformen werden nachstehend noch genauer beschrieben.

Als Ergebnis einer derartigen Zeitsteuerung durch vorgegebene Zeitspannen in einem Timer kann das Gesamtsystem früh Entscheidungen treffen und beispielsweise schon handlungsfähig sein, ohne dass die endgültige Auswertung und detaillierte Analyse durch das zweite neuronale Netz schon abgeschlossen sein muss. Als Beispiel kann eine Situation in einem autonomen Fahrsystem betrachtet werden, die von einem derartigen System mit mindestens zwei gekoppelten Netzen bewertet werden soll. Durch die erste Einheit bzw. das erste neuronale Netz kann eine frühe Kategorisierung "Gefahr" erreicht werden, die noch keine weitergehende Einschätzung über die Art der Gefahr beinhaltet, aber bereits zu einer sofortigen Reaktion wie etwa einer Verlangsamung der Geschwindigkeit des Fahrzeugs und der Aktivierung der Brems- und Sensorsysteme führen kann. Gleichzeitig führt das zweite neuronale Netz auf Grundlage der Kategorisierung, nämlich unter Einfluss der Modulation durch die Ausgabewerte des ersten Netzes, eine tiefergehende Analyse der Situation durch, die dann zu weiteren Reaktionen oder Veränderungen des Gesamtsystems auf Grundlage der Ausgabewerte des zweiten Netzes führen kann.

Es ist auch denkbar, nicht für jedes der gekoppelten Netze eine Zeitbegrenzung vorzugeben, sondern nur für eines der Netze (bzw. bei Koppelung von mehr als zwei Netzen auch für nur eine Teilmenge der gekoppelten Netze). Beispielsweise könnte in dem oben genannten Beispiel ein Timer für das erste, schnell kategorisierende neuronale Netz eingesetzt werden, während das zweite Netz keine feste Zeitvorgabe erhält, oder umgekehrt. Eine derartige Ausführungsform kann auch mit weiteren Verfahren zur Bestimmung des momentan dominanten Netzes kombiniert werden, die nachstehend noch genauer beschrieben werden.

In allen Ausführungsformen mit eingesetztem Timer kann vorgesehen sein, dass als Ausgabe des Gesamtsystems jeweils die Ausgabewerte desjenigen neuronalen Netzes verwendet werden, welches momentan einen aktiven Timer aufweist. Aufgrund der Zeit, die ein Netz bis zum Erreichen einer ersten Lösung für vorgegebene Eingabewerte benötigt, ergibt sich dabei eine gewisse Latenzzeit, innerhalb derer noch die vorherigen Ausgabewerte (des ersten oder zweiten Netzes) als Gesamtausgabewerte vorliegen.

Falls nur für einen Teil der gekoppelten Netze Zeitvorgaben festgelegt sind, z.B. nur für ein erstes Netz ein Timer wirkt, kann beispielsweise definiert sein, dass die Ausgabe des Gesamtsystems im allgemeinen immer der Ausgabe des zweiten Netzes entspricht und nur dann durch die Ausgabe des ersten Netzes ersetzt wird, wenn für das erste Netz eine Timer aktiv ist, d.h. eine vorgegebene Zeitspanne aktiv läuft und noch nicht abgelaufen ist.

In einem System mit mehr als zwei Netzen kann durch Angleichung der vorgegebenen Zeitspannen und Wechsel des Timers auch eine sinnvolle Synchronisation der Netze untereinander ermöglicht werden, insbesondere wenn mehrere Netze mit unterschiedlichen Aufgaben gleichzeitig zu einem Ergebnis kommen sollen, das wiederum Einfluss auf ein oder mehrere andere Netze haben soll. Ebenso kann durch Anpassung der vorgegebenen Zeitspannen und Abläufe eine Synchronisation auch unter mehreren getrennten Gesamtsystemen, die jeweils mehrere gekoppelte Netze umfassen, erreicht werden. Dabei können die Systeme beispielsweise durch einen Zeitabgleich synchronisiert werden und dann selbständig, aber synchron gemäß der jeweiligen Timer-Vorgaben ablaufen.

Zusätzlich oder alternativ zur Änderung des jeweils dominierenden neuronalen Netzes im Gesamtsystem auf Grundlage eines Timers kann auch jedes der neuronalen Netze selbst auf kooperative Weise Entscheidungen zur Übergabe der Dominanz treffen. Dies kann beispielsweise bedeuten, dass ein erstes neuronales Netz eines Gesamtsystems die Eingabewerte verarbeitet und zu einer bestimmten ersten Lösung bzw. bestimmten Ausgabewerten kommt.

Wie auch bei der Schwerpunktveränderung mit Hilfe des Timers kann hier festgelegt sein, dass die Ausgabewerte des Gesamtnetzes jeweils den Ausgabewerten des aktuell dominierenden Netzes entsprechen.

Zu diesem Zweck können beispielsweise Veränderungen in den Eingangswerten bewertet werden. Solange die Eingangswerte im Wesentlichen unverändert bleiben, kann auch die Dominanzverteilung unter den gekoppelten Netzen im Wesentlichen unverändert bleiben, und/oder ausschließlich auf Grundlage eines Timers bestimmt werden. Falls jedoch die Eingangswerte sich plötzlich verändern, kann eine vorgegebene Dominanz festgelegt sein, welche das sonstige Dominanzverhalten der gekoppelten Netze überschreibt. So kann beispielsweise für plötzlich veränderte Eingangswerte bestimmt werden, dass die Dominanz in jedem Fall zunächst wieder auf die das erste neuronale Netz übergeht. Damit wird auch ein optional vorhandener Timer für dieses erste neuronale Netz erneut gestartet und der Ablauf wie zuvor bereits beschrieben durchgeführt. Eine deutliche Änderung der Eingangswerte könnte beispielsweise auftreten, wenn Sensorwerte eine neue Umgebung erfassen oder wenn ein zuvor bewerteter Prozess abgeschlossen wurde und nun ein neuer Prozess angestoßen werden soll.

Dabei können Schwellwerte in Form einer Signifikanzschwelle vorgegeben sein, anhand derer bestimmt werden kann, ob eine Änderung der Eingabewerte als wesentlich betrachtet werden soll und zu einer Änderung der Dominanz führen soll. Es können auch für unterschiedliche Eingabewerte bzw. für jeden Eingabewert einzelne Signifikanzschwellen vorgegeben sein, oder es kann ein allgemeiner Wert, z.B. in Form einer prozentualen Abweichung, als Grundlage für die Bewertung einer Veränderung der Eingabewerte vorgesehen sein. Ebenso könnten anstelle von festen Signifikanzschwellen zeitlich oder adaptiv und situationsabhängig veränderbare Schwellen vorliegen, oder es kann sich dabei um Funktionen, Matrizen oder Muster handeln, anhand derer die Signifikanz der Veränderung bewertet werden kann.

Alternativ oder zusätzlich kann die Veränderung der Dominanz unter den gekoppelten Netzen abhängig von den gefundenen Ausgabewerten jedes Netzes gemacht werden. Je nach Ausführungsform kann beispielsweise das erste neuronale Netz die Eingabewerte und/oder deren Veränderung bewerten. Dabei können für die Klassen, die für das erste neuronale Netz zur Klassifizierung vorliegen, jeweils Signifikanzschwellen vorgegeben sein, so dass bei einem Ergebnis des ersten neuronalen Netzes, das für die Eingabedaten einen signifikanten Wechsel der gefundenen Klasse ergibt, sofort eine Übergabe der Dominanz an das erste neuronale Netz stattfindet, so dass eine schnelle Neubewertung der Situation und gegebenenfalls eine Reaktion stattfinden kann. Auf diese Weise kann auch verhindert werden, dass trotz signifikant veränderter Eingabesituation, die durch das erste, schnell kategorisierende Netz erkannt wurde, unnötig lange weiter ohne Berücksichtigung der Veränderung vom zweiten neuronalen Netz in die Tiefe analysiert wird.

In allen vorstehenden Beispielen können die Ausgabewerte des Gesamtsystems auf beliebige Weise weiterverwendet werden, beispielsweise als direkte oder indirekte Steuersignale für Aktoren, als Daten, die für zukünftige Verwendung abgespeichert werden, oder als Signal, das an Ausgabeeinheiten weitergegeben wird. In allen Fällen können die Ausgabewerte auch zunächst weiter durch zusätzliche Funktionen und Bewertungen weiterverarbeitet werden und/oder mit weiteren Daten und Werten kombiniert werden.

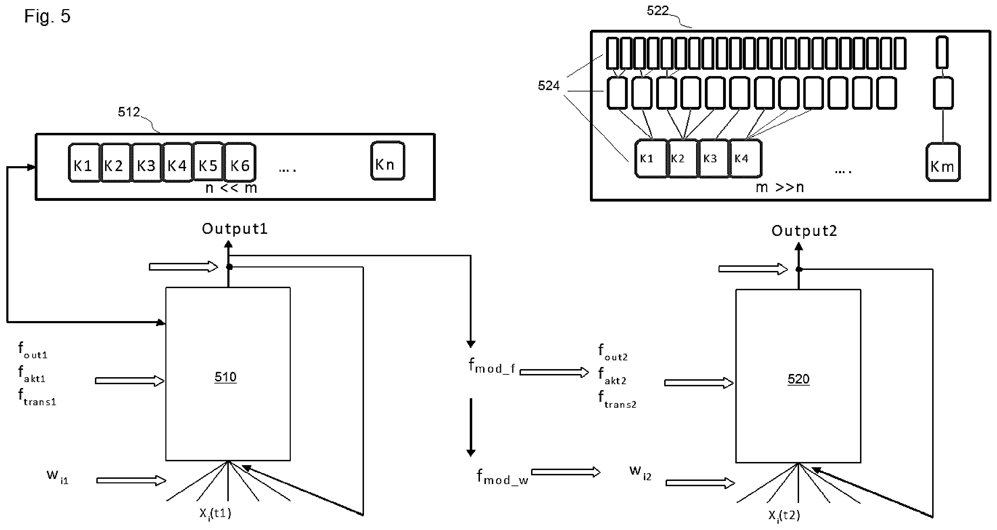

Figur 5 zeigt erneut das einfache Ausführungsbeispiel wie in Figur 1 mit zwei unidirektional gekoppelten Netzen 510, 520, wobei nun für jedes der Netze ein Klassifikationsspeicher 512, 522 schematisch gezeigt ist. Die Art der verwendeten Klassifikationen Kᵢ ist hier zunächst zweitrangig und wird nachstehend noch genauer beschrieben. Dabei können sich insbesondere die Dimension und der Aufbau der beiden Klassifikationsspeicher des ersten 512 und zweiten Netzes 522 deutlich unterscheiden, so dass zwei neuronale Netze mit unterschiedlichen Geschwindigkeiten und Schwerpunkten gebildet werden. Damit kann beispielsweise wie bereits kurz beschrieben ein Zusammenspiel aus einem schnellen, grob kategorisierenden und einem langsameren, aber detaillierter analysierenden Netz zu einem gekoppelten Gesamtsystem erreicht werden.

Im vorliegenden Beispiel wird ein erstes neuronales Netz 510 mit relativ wenigen Klassifikationen K₁, K₂, ...., Kₙ ausgebildet, die beispielsweise auch nur einer flachen Hierarchie folgen können, so dass nur in einer Dimension kategorisiert wird. Bevorzugt kann ein derartiges erstes Netz 510 auch in seiner Topologie vergleichsweise einfach ausgebildet sein, also mit einer nicht zu großen Anzahl n von Neuronen und verborgenen Schichten. Grundsätzlich kann die Netztopologie aber auch im Wesentlichen unabhängig von den Klassifizierungen sein.

Das zweite neuronale Netz 520 kann dann ein deutlich größeres und/oder komplexeres Klassifikationssystem aufweisen. Beispielsweise kann dieser Speicher 522 bzw. die zugrundeliegende Klassifikation auch hierarchisch in mehreren Ebenen 524 aufgebaut sein, wie in der Figur 5 gezeigt ist. Die Gesamtanzahl m der Klassen K1, K2, ...., Kₘ des zweiten Netzes 520 kann sehr groß sein, insbesondere deutlich größer als die Anzahl n der Klassen, die von dem ersten neuronalen Netz 510 verwendet werden. Beispielsweise könnte sich die Anzahl m, n der Klassen um ein oder mehrere Größenordnungen unterscheiden. Damit wird eine asymmetrische Verteilung der einzelnen Netze im Gesamtsystem erreicht.

Die schnelle Klassifizierung durch das erste neuronale Netz 510 kann dann dazu dienen, die Eingabewerte rasch einzuordnen. Dazu können bevorzugt abstrakte, zusammenfassende Klassen verwendet werden. Die Einordnung einer erfassten Situation (z.B. auf Grundlage von Sensordaten wie Bild- und Audiodaten) kann dann in einem Beispiel zunächst durch das erste neuronale Netz 510 als "großes, möglicherweise gefährliches Tier" erfolgen, ohne dazu weitere Auswertungen vorzunehmen. Dies bedeutet, dass z.B. keine weitere Klassifizierung nach Tierarten (Wolf, Hund) oder als gefährliches Raubtier in dem ersten Netz erfolgt, sondern nur nach möglichst breit gefassten, allgemeinen Merkmalen wie etwa der Größe, Erfassung von Zähnen, Angriffshaltungen und weiteren Eigenschaften klassifiziert wird. Diese Daten, die im Wesentlichen der Ausgabe "Gefahr" entsprechen, können dann optional bereits zur vorläufigen und schnellen Reaktion weiter an entsprechende externe Systeme gegeben werden, z.B. ein Warnsystem für einen Nutzer oder an bestimmte Aktoren eines automatisierten Systems. Außerdem wird die Ausgabe Output 1 des ersten neuronalen Netzes 510 zur Erzeugung der beschriebenen Modulationsfunktionen für das zweite neuronale Netz 520 genutzt.

Dieselben Eingabewerte Xᵢ, also z.B. die genannten Sensorwerte, werden auch an das zweite neuronale Netz 520 gegeben. Dabei können die Eingabewerte sofort, also im Wesentlichen gleichzeitig wie an das erste Netz, oder verzögert eingegeben werden, wobei sie je nach Ausführungsform bereits vor oder erst bei Anwendung der Modulationsfunktionen, d.h. bei Vorliegen des Ergebnisses des ersten Netzes eingegeben werden. Bevorzugt sollten sie insbesondere bei zeitkritischen Prozessen nicht später an das zweite neuronale Netz gegeben werden, um Verzögerungen zu vermeiden. Das zweite neuronale Netz berechnet dann ebenfalls eine Lösung, wobei die von diesem zweiten Netz ursprünglichen selbstgenerierten Gewichte und seine Basisfunktionen (wie die festgelegten Aktivierungsfunktionen und Ausgabefunktionen) jeweils auf Grundlage der Modulationsfunktionen überlagert werden können, die aus den Ausgabewerten des ersten Netzes gebildet wurden. Dadurch können bei der iterativen Arbeit des zweiten Netzes eine Vielzahl möglicher Varianten entfallen, für die bei einer von dem ersten Netz schnell erkannten kritischen Situation (z.B. einer Gefahrensituation) keine Zeit wäre. Während die langsamere Analyse des zweiten neuronalen Netzes stattfindet, können wie beschrieben bereits mögliche Reaktionen auf Basis des ersten neuronalen Netzes ausgeführt werden. Dies entspricht einer ersten instinktiven Reaktion in biologischen Systemen. Der hierarchische und gegenüber dem ersten Netz deutlich größere Speicher des zweiten Netzes erlaubt dann eine präzise Analyse der Eingabewerte, in dem genannten Beispiel eine detaillierte Einordnung in die Klasse "Hund", die jeweilige Rasse, Verhaltensmerkmale, die auf Gefahren oder eine harmlose Situation schließen lassen, und weitere. Bei Bedarf kann dann nach Erreichen eines Ergebnisses durch das zweite neuronale Netz die vorherige Reaktion des Gesamtsystems überschrieben werden, indem z.B. die erste Einordnung "Gefahr" wieder herabgestuft wird.

Insgesamt kann für ein derartig gekoppeltes Gesamtsystem mit asymmetrischer Klassifizierung beispielsweise vorgesehen sein, dass die Klassen Kₙ des schnell klassifizierenden ersten Netzes 510 vor allem abstrakte Einordnungen wie neue/bekannte Situation, gefährliches/ungefährliches Ereignis, interessantes/uninteressantes Merkmal, Entscheidung erforderlich/nicht erforderlich und ähnliche vornehmen, ohne dabei in die Tiefe zu gehen. Diese erste Klassifizierung muss dabei nicht zwingend dem Endergebnis entsprechen, das durch die zweite Einheit 520 letztendlich gefunden wird. Die zweistufige Klassifizierung durch mindestens eine schnelle und eine tief analysierende Einheit erlaubt aber damit gefühlsähnliche oder instinktive Reaktionen eines künstlich lernenden Gesamtsystems. Wenn beispielsweise ein Objekt durch Bilderkennung identifiziert wird, das möglicherweise eine Schlange sein könnte, kann bevorzugt der "worst case" das Ergebnis der ersten Klassifizierung sein, unabhängig davon, ob diese Einordnung wahrscheinlich richtig ist oder nicht. Was im Fall der menschlichen Intelligenz als evolutionäres Wissen und instinktive Reaktion vorliegt, kann durch eine schnelle erste Klassifizierung mit vorprogrammiertem Wissen ersetzt werden, so dass ebenfalls entsprechende Standardreaktionen (Abstand halten, Bewegung einleiten, erhöhte Aufmerksamkeit aktivieren) durch das Gesamtsystem und seine Aktoren durchgeführt werden können. Die zusätzliche Modulation der zweiten lernenden Einheit auf Basis dieser ersten Klassifizierung kann dann ähnlich wie eine gefühlsbedingte Überlagerung verstanden werden, d.h. beispielsweise entsprechend einer Angstreaktion, die automatisch eine andere bewusste Situationsanalyse einleitet als eine als harmlos verstandene Situation. Die Überlagerung der Parameter des zweiten neuronalen Netzes, die durch die Modulationsfunktionen vorgenommen wird, kann dabei die erforderliche Verschiebung in andere, ansonsten standardmäßig nicht oder nicht sofort erreichte Klassifikationsräume bewirken.

Entsprechend können derartige Systeme für eine Vielzahl von Anwendungsbereichen eingesetzt werden, beispielsweise in allen Anwendungen, in denen kritische Entscheidungssituationen auftreten. Beispiele sind Fahrsysteme, Rettungs- oder Warnsysteme für unterschiedliche Gefahrenarten, Chirurgiesysteme, und allgemein komplexe und nichtlineare Aufgabenstellungen.

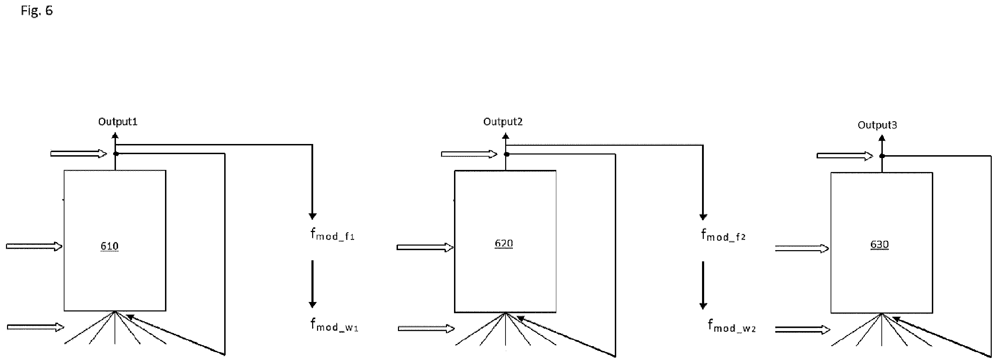

In den bisher beschriebenen Ausführungsformen wurden nur zwei künstlich lernende Einheiten miteinander gekoppelt. Diese Idee ist aber grundsätzlich auch auf mehr als zwei Einheiten anwendbar, so dass beispielsweise drei oder mehr künstlich lernende Einheiten auf entsprechende Art und Weise gekoppelt werden können, wobei festgelegt sein kann, welche der Einheiten die Parameter einer bestimmten anderen Einheit oder mehrerer anderer Einheiten modulieren kann. Figur 6 zeigt ein Beispiel, in dem drei neuronale Netze 610, 620, 630 (und/oder andere künstlich lernende Einheiten) vorgesehen sein können, wobei die Ausgabewerte des ersten Netzes 610 Modulationsfunktionen für die Gewichte und/oder Funktionen des zweiten Netzes 620 ergeben, und wobei wiederum Ausgabewerte des zweiten Netzes Modulationsfunktionen für die Gewichte und/oder Funktionen des dritten Netzes 630 ergeben. Auf diese Art und Weise könnten beliebig lange Ketten aus künstlich lernenden Einheiten gebildet werden, die sich gekoppelt durch Überlagerung beeinflussen.

Dabei können ähnlich wie im früheren Beispiel mit zwei neuronalen Netzen in einer Ausführungsform alle gekoppelten Netze dieselben Eingabewerte erhalten und die Verarbeitung nur durch die Modulation der jeweiligen Netze gekoppelt werden. Ebenso sind aber Ausführungsformen denkbar, in denen beispielsweise anschließend an zwei neuronale Netze wie in Figur 1 ein drittes neuronales Netz vorgesehen ist, welches die Ausgabewerte des ersten und/oder zweiten Netzes als Eingabewerte erhält. Optional könnten auch die Funktionen und/oder Gewichte dieses dritten neuronalen Netzes durch Modulationsfunktionen moduliert werden, die beispielsweise aus den Ausgabewerten des ersten Netzes gebildet werden. Dabei kann es sich um dieselben oder auch um andere Modulationsfunktionen als die für das zweite Netz gebildeten Modulationsfunktionen handeln. Alternativ könnten beispielsweise die Ausgabewerte des dritten Netzes verwendet werden, um zusätzliche Modulationsfunktionen zu bilden, die dann auf das erste und/oder zweite Netz rekursiv angewendet werden.

Es versteht sich, dass diverse weitere Kombinationen entsprechend gekoppelter lernender Einheiten möglich sind, bei denen zumindest zwei der verbundenen Einheiten eine Kopplung durch Bildung von Modulationsfunktionen für die beschreibenden Parameter der Einheiten, insbesondere für den Fall neuronaler Netze für die Gewichte und/oder Funktionen eines Netzes aufweisen. Mit zunehmender Anzahl der gekoppelten Einheiten sind dabei auch komplexere Variationen der Modulationen und Kopplungen denkbar.

Wie bereits anfangs angemerkt, wurden die hier beschriebenen Ausführungsformen zwar beispielhaft in Bezug auf neuronale Netze beschrieben, können aber grundsätzlich auch auf andere Formen des maschinellen Lernens übertragen werden. Dabei kommen alle Varianten in Betracht, bei denen eine Beeinflussung mindestens einer zweiten künstlich lernenden Einheit durch eine erste künstlich lernende Einheit durch Überlagerung bzw. Modulation auf Grundlage von Ausgabewerten möglich ist. Die Veränderung der Gewichte und Funktionen eines neuronalen Netzes durch Überlagerung mittels Modulationsfunktionen aus den vorstehenden Beispielen kann durch eine entsprechende Modulierung jedes geeigneten Parameters, der die Funktionsweise einer derartigen lernenden Einheit steuert bzw. beschreibt, ersetzt werden. In den Beispielen kann jeweils der Begriff "lernende Einheit" durch den Spezialfall eines neuronalen Netzes ersetzt werden, und umgekehrt können die beschriebenen neuronalen Netze der beispielhaften Ausführungsformen auch jeweils verallgemeinert in Form einer künstlich lernenden Einheit implementiert werden, auch wenn es im jeweiligen Beispiel nicht explizit angeführt ist.

Als Beispiele sind neben neuronalen Netzen unter anderem Evolutionäre Algorithmen, Support Vector Machines (SVM), Entscheidungsbäume sowie jeweilige Spezialformen wie Random Forests oder Genetische Algorithmen bekannt.

Ebenso können neuronale Netze und andere künstlich lernende Einheiten miteinander kombiniert werden. Dabei ist es insbesondere möglich, z.B. das erste neuronale Netz aus den vorstehenden Beispielen, das als schnell kategorisierende Einheit dargestellt wurde, durch eine beliebige andere künstlich lernende Einheit zu ersetzen. Dabei kann auch gezielt eine Methode gewählt werden, die sich für eine schnelle, grobe Klassifizierung von Merkmalen besonders gut eignet. Die Ausgabewerte einer solchen ersten lernenden Einheit können dann aber ebenso, wie es für zwei neuronale Netze beschrieben wurde, zur Bildung von Modulationsfunktionen für eine zweite künstlich lernende Einheit angewendet werden, die insbesondere wieder ein neuronales Netz sein kann.

Es versteht sich, dass die vorstehend beschriebenen Beispiele beliebig miteinander kombiniert werden können. Beispielsweise kann in jeder der beschriebenen Ausführungsformen auch ein Timer, der in Zusammenhang mit Figur 4 beschrieben wurde, vorhanden sein. Ebenso können die lernenden Einheiten in allen Beispiele Klassifikationsspeicher aufweisen, wie sie als Beispiel in Verbindung mit Figur 5 beschrieben wurde. Alle diese Varianten sind wiederum auf eine Kopplung auch mehrerer künstlich lernender Einheiten anwendbar.

## Patentansprüche

1. Prozessimplementiertes Verfahren in einem System für Anwendungen, in denen kritische Entscheidungssituationen auftreten, aus mindestens zwei künstlich lernenden
Einheiten, umfassend
Eingeben von Eingabewerten (Xᵢ) an mindestens eine erste künstlich lernende Einheit (110, 310, 410, 510, 610) und eine zweite künstlich lernende Einheit (120, 320, 420, 520, 620), wobei die Eingabewerte Sensorwerte und/oder Audiodaten und/oder Bilddaten umfassen; Erhalten von ersten Ausgabewerten (Output1) der ersten künstlich lernenden Einheit (110, 310, 410, 510, 610), die eine Klassifizierung in Bezug auf "riskante" oder "nicht riskante" Klassen anzeigen;
Bilden einer oder mehrerer Modulationsfunktionen (f_{mod_f}, f_{mod_w}) auf Grundlage der Ausgabewerte (Output1) der ersten künstlich lernenden Einheit;
Anwenden der gebildeten einen oder mehreren Modulationsfunktionen auf einen oder mehrere Parameter der zweiten künstlich lernenden Einheit (120, 320, 420, 520, 620), wobei die ein oder mehreren Parameter die Verarbeitung von Eingabewerten und das Gewinnen von Ausgabewerten in der zweiten künstlich lernenden Einheit (120, 320, 420, 520, 620) beeinflussen,
wobei die zweite künstlich lernende Einheit (110, 120; 310, 320; 410, 420; 510, 520; 610, 620, 630) ein neuronales Netz mit einer Vielzahl von Knoten umfasst, und wobei der ein oder mehrere Parameter mindestens eines der folgenden ist: eine Gewichtung (wᵢ) für einen Knoten des neuronalen Netzes, eine Aktivierungsfunktion (fₐₖₜ) eines Knotens, eine Ausgabefunktion (fₒᵤₜ) eines Knotens, eine Propagierungsfunktion eines Knotens;
Erhalten von zweiten Ausgabewerten (Output2) der zweiten künstlich lernenden Einheit,
Festlegen einer Einheit aus den mindestens zwei künstlich lernenden Einheiten als aktuell dominierende Einheit in dem System; und
Bilden von aktuellen Gesamtausgabewerten des Systems aus den Ausgabewerten (Output1, Output2) der aktuell dominierenden Einheit, wobei die Gesamtausgabewerte eine Klassifizierung der Eingabewerte darstellen;
Bereitstellung der Ausgabedaten zur Steuerung zum Mindesten eines spezifischen Aktors eines automatisierten Systems.

2. Verfahren nach Anspruch 1, wobei jeder der künstlich lernenden Einheiten ein Klassifikationsspeicher (512, 522) zugeordnet ist, wobei jede der künstlich lernenden Einheiten eine Einordnung der Eingabewerte in ein oder mehrere Klassen (K1, K2, ..., Kₙ, Kₘ) vornimmt, welche in dem Klassifikationsspeicher (512, 522) gespeichert sind, wobei die Klassen jeweils in einer oder mehreren abhängigen Ebenen (524) strukturiert sind, und wobei eine Anzahl der Klassen (n) und/oder der Ebenen in einem ersten Klassifikationsspeicher (512) der ersten künstlich lernenden Einheit geringer ist als eine Anzahl der Klassen (m) und/oder der Ebenen in einem zweiten Klassifikationsspeicher (522) der zweiten künstlich lernenden Einheit.

3. Verfahren nach einem der vorhergehenden Ansprüche, wobei das Anwenden der mindestens einen Modulationsfunktion eine zeitabhängige Überlagerung von Parametern der zweiten künstlich lernenden Einheit bewirkt, und wobei die mindestens eine Modulationsfunktion (f_{mod_f}, f_{mod_w}) eines der folgenden umfasst: eine periodische Funktion, eine Stufenfunktion, eine Funktion mit kurzzeitig erhöhten Amplituden, eine gedämpfte Schwingungsfunktion, eine Schwebungsfunktion als Überlagerung mehrerer periodischer Funktionen, eine stetig zunehmende Funktion, eine stetig abnehmende Funktion.

4. Verfahren nach einem der vorhergehenden Ansprüche, wobei die zweite künstlich lernende Einheit ein zweites neuronales Netz mit einer Vielzahl von Knoten umfasst, und wobei das Anwenden der mindestens einen Modulationsfunktion eine Deaktivierung von mindestens einem Teil der Knoten bewirkt.

5. Verfahren nach einem der vorhergehenden Ansprüche, wobei die erste künstlich lernende Einheit (110, 310, 410, 510, 610) mindestens so lange als dominierende Einheit festgelegt wird, bis ein oder mehrere Ausgabewerte (Output2) der zweiten künstlich lernenden Einheit (120, 320, 420, 520, 620) vorliegen.

6. Verfahren nach einem der vorhergehenden Ansprüche,
weiter umfassend einen Vergleich der derzeitigen Eingabewerte mit vorherigen Eingabewerten durch mindestens eine der künstlichen lernenden Einheiten des Systems,
wobei, falls der Vergleich eine Abweichung ergibt, die über einem vorgegebenen Eingabe-Schwellwert liegt, die erste künstlich lernende Einheit (110, 310, 410, 510, 610) als dominierende Einheit festgelegt wird.

7. Verfahren nach einem der vorhergehenden Ansprüche, weiter umfassend einen Vergleich von derzeitigen Ausgabewerten der ersten künstlich lernenden Einheit mit vorherigen Ausgabewerten der ersten künstlichen Einheit,
wobei, falls der Vergleich eine Abweichung ergibt, die über einem vorgegebenen Ausgabe-Schwellwert liegt, die erste künstlich lernende Einheit als dominierende Einheit festgelegt wird.

8. Verfahren nach einem der vorhergehenden Ansprüche, wobei das System weiter einen Timer (440) umfasst, in dem ein oder mehrere vorgegebene Zeitspannen gespeichert sind, die einer oder mehreren der künstlich lernenden Einheiten (410, 420) zugeordnet sind, und wobei der Timer (440) dazu eingerichtet ist, für jeweils eine der künstlich lernenden Einheiten (410, 420) den Ablauf der dieser Einheit zugeordneten vorgegebenen Zeitspanne zu messen.

9. Verfahren nach Anspruch 8, wobei das Messen der zugeordneten vorgegebenen Zeitspanne für eine der künstlich lernenden Einheiten gestartet wird, sobald diese künstlich lernende Einheit als dominierende Einheit festgelegt wird.

10. Verfahren nach Anspruch 8 oder 9, wobei die zweite künstlich lernende Einheit (420) als dominierende Einheit festgelegt wird, falls eine für die erste künstlich lernende Einheit (410) vorgegebene erste Zeitspanne in dem Timer abgelaufen ist.

## Claims

1. Process-implemented method in a system for applications in which critical decision situations arise, comprising at least two artificial learning units, comprising
inputting input values (Xᵢ ) to at least one first artificial learning unit (110, 310, 410, 510, 610) and a second artificial learning unit (120, 320, 420, 520, 620), wherein the input values comprise sensor values and/or audio data and/or image data;
obtaining first output values (Output1) from the first artificial learning unit (110, 310, 410, 510, 610) indicating a classification with respect to "risky" or "non-risky" classes;
forming one or more modulation functions (f_{mod_f} , f_{mod_w} ) based on the output values (Output1) of the first artificial learning unit;
applying the formed one or more modulation functions to one or more parameters of the second artificial learning unit (120, 320, 420, 520, 620), wherein the one or more parameters influence the processing of input values and the obtaining of output values in the second artificial learning unit (120, 320, 420, 520, 620),
wherein the second artificial learning unit (110, 120; 310, 320; 410, 420; 510, 520; 610, 620, 630) comprises a neural network with a plurality of nodes, and wherein the one or more parameters are at least one of the following: a weighting (wᵢ ) for a node of the neural network, an activation function (f_{act} ) of a node, an output function (fₒᵤₜ ) of a node, a propagation function of a node;
obtaining second output values (Output2) of the second artificial learning unit,
establishing one unit from the at least two artificial learning units as the currently dominant unit in the system; and
forming current total output values of the system from the output values (Output1, Output2) of the currently dominant unit, wherein the total output values represent a classification of the input values;
providing the output data to control at least one specific actuator of an automated system.

2. Method according to claim 1 , wherein each of the artificial learning units is assigned a classification memory (512, 522) , wherein each of the artificial learning units performs a classification of the input values into one or more classes (K1, K2, ..., K_{(n,) K(}m_{) )}which are stored in the classification memory (512, 522), wherein the classes are each structured in one or more dependent levels (524) , and wherein a number of the classes (n) and/or levels in a first classification memory (512) of the first artificial learning unit is smaller than a number of the classes (m) and/or levels in a second classification memory (522) of the second artificial learning unit.

3. Method according to one of the preceding claims, wherein the application of the at least one modulation function causes a time-dependent superposition of parameters of the second artificial learning unit, and wherein the at least one modulation function (f_{mod_f} , f_{mod_w} ) comprises one of the following: a periodic function, a step function, a function with briefly increased amplitudes, a damped oscillation function, a beat function as a superposition of several periodic functions, a continuously increasing function, a continuously decreasing function.

4. Method according to one of the preceding claims, wherein the second artificial learning unit comprises a second neural network with a plurality of nodes, and wherein the application of the at least one modulation function causes deactivation of at least some of the nodes.

5. Method according to one of the preceding claims, wherein the first artificial learning unit (110, 310, 410, 510, 610) is designated as the dominant unit at least until one or more output values (Output2) of the second artificial learning unit (120, 320, 420, 520, 620) are available.

6. Method according to one of the preceding claims,
further comprising a comparison of the current input values with previous input values by at least one of the artificial learning units of the system,
wherein, if the comparison results in a deviation that exceeds a predetermined input threshold value, the first artificial learning unit (110, 310, 410, 510, 610) is determined to be the dominant unit.

7. Method according to one of the preceding claims, further comprising a comparison of current output values of the first artificial learning unit with previous output values of the first artificial unit,
wherein, if the comparison results in a deviation that is above a predetermined output threshold value, the first artificial learning unit is designated as the dominant unit.

8. Method according to one of the preceding claims, wherein the system further comprises a timer (440) in which one or more predetermined time periods are stored that are assigned to one or more of the artificial learning units (410, 420), and wherein the timer (440) is configured to measure, for each of the artificial learning units (410, 420), the elapse of the predetermined time period associated with that unit.

9. Method according to claim 8, wherein the measurement of the assigned predetermined time period for one of the artificial learning units is started as soon as this artificial learning unit is defined as the dominant unit.

10. Method according to claim 8 or 9, wherein the second artificial learning unit (420) is determined to be the dominant unit if a first time period specified for the first artificial learning unit (410) has elapsed in the timer.

## Revendications

1. Méthode implémentée par un processus dans un système pour des applications dans lesquelles surviennent des situations de décision critiques, à partir d'au moins deux unités d'apprentissage artificiel, comprenant
l'entrée de valeurs d'entrée (Xᵢ ) dans au moins une première unité d'apprentissage artificiel (110, 310, 410, 510, 610) et une deuxième unité d'apprentissage artificiel (120, 320, 420, 520, 620), les valeurs d'entrée comprenant des valeurs de capteur et/ou des données audio et/ou des données d'image ;
obtention de premières valeurs de sortie (Output1) de la première unité d'apprentissage artificiel (110, 310, 410, 510, 610) qui indiquent une classification en classes « à risque » ou « sans risque » ;
formation d'une ou plusieurs fonctions de modulation (f_{mod_f} , f_{mod_w} ) sur la base des valeurs de sortie (Output1) de la première unité d'apprentissage artificiel ;
application de la ou des fonctions de modulation formées à un ou plusieurs paramètres de la deuxième unité d'apprentissage artificiel (120, 320, 420, 520, 620), lesdits un ou plusieurs paramètres influençant le traitement des valeurs d'entrée et l'obtention des valeurs de sortie dans la deuxième unité d'apprentissage artificiel (120, 320, 420, 520, 620) ;
la deuxième unité d'apprentissage artificiel (110, 120 ; 310, 320 ; 410, 420 ; 510, 520 ; 610, 620, 630) comprenant un réseau neuronal avec une pluralité de nœuds, et le ou les paramètres étant au moins l'un des suivants : une pondération (wᵢ ) pour un noeud du réseau neuronal, une fonction d'activation (fₐₖₜ ) d'un noeud, une fonction de sortie (fₒᵤₜ ) d'un noeud, une fonction de propagation d'un noeud ;
obtention de secondes valeurs de sortie (Output2) de la seconde unité d'apprentissage artificiel,
détermination d'une unité parmi les au moins deux unités d'apprentissage artificiel comme unité actuellement dominante dans le système ; et formation de valeurs de sortie totales actuelles du système à partir des valeurs de sortie (Output1, Output2) de l'unité actuellement dominante, les valeurs de sortie totales représentant une classification des valeurs d'entrée ;
fourniture des données de sortie pour commander au moins un actionneur spécifique d'un système automatisé.

2. Méthode selon la revendication 1, dans laquelle chacune des unités d'apprentissage artificiel est associée à une mémoire de classification (512, 522) , chacune des unités d'apprentissage artificiel effectuant un classement des valeurs d'entrée dans une ou plusieurs classes (K1, K2, ..., K_{(n,) K(}m_{) )}qui sont enregistrées dans la mémoire de classification (512, 522), les classes étant structurées chacune en un ou plusieurs niveaux dépendants (524) et un nombre de classes (n) et/ou de niveaux dans une première mémoire de classification (512) de la première unité d'apprentissage artificiel étant inférieur à un nombre de classes (m) et/ou de niveaux dans une deuxième mémoire de classification (522) de la deuxième unité d'apprentissage artificiel.

3. Méthode selon l'une des revendications précédentes, dans laquelle l'application d'au moins une fonction de modulation provoque une superposition dépendante du temps de paramètres de la deuxième unité d'apprentissage artificiel, et dans lequel la au moins une fonction de modulation (f_{mod_f} , f_{mod_w} ) comprend l'une des fonctions suivantes : une fonction périodique, une fonction en escalier, une fonction avec des amplitudes brièvement augmentées, une fonction oscillatoire amortie, une fonction de battement comme superposition de plusieurs fonctions périodiques, une fonction croissant de manière continue, une fonction décroissant de manière continue.

4. Méthode selon l'une des revendications précédentes, dans laquelle la deuxième unité d'apprentissage artificiel comprend un deuxième réseau neuronal avec une pluralité de nœuds, et dans lequel l'application de la au moins une fonction de modulation provoque la désactivation d'au moins une partie des nœuds.

5. Méthode selon l'une des revendications précédentes, dans laquelle la première unité d'apprentissage artificiel (110, 310, 410, 510, 610) est définie comme unité dominante au moins jusqu'à ce qu'une ou plusieurs valeurs de sortie (Output2) de la deuxième unité d'apprentissage artificiel (120, 320, 420, 520, 620) soient disponibles.

6. Méthode selon l'une des revendications précédentes,
comprenant en outre une comparaison des valeurs d'entrée actuelles avec des valeurs d'entrée précédentes par au moins une des unités d'apprentissage artificiel du système,
dans laquelle, si la comparaison révèle un écart supérieur à une valeur seuil d'entrée prédéfinie, la première unité d'apprentissage artificiel (110, 310, 410, 510, 610) est définie comme unité dominante.

7. Méthode selon l'une des revendications précédentes, comprenant en outre une comparaison des valeurs de sortie actuelles de la première unité d'apprentissage artificiel avec les valeurs de sortie précédentes de la première unité artificielle,
dans laquelle, si la comparaison révèle un écart supérieur à une valeur seuil de sortie prédéterminée, la première unité d'apprentissage artificiel est définie comme unité dominante.

8. Méthode selon l'une des revendications précédentes, dans laquelle le système comprend en outre une minuterie (440) dans laquelle sont stockées une ou plusieurs durées prédéfinies qui sont attribuées à une ou plusieurs des unités d'apprentissage artificiel (410, 420), et dans lequel le temporisateur (440) est conçu pour mesurer, pour chacune des unités d'apprentissage artificiel (410, 420), l'écoulement de la période de temps prédéfinie associée à cette unité.

9. Méthode selon la revendication 8, dans laquelle la mesure de la période de temps prédéfinie attribuée pour l'une des unités d'apprentissage artificiel est lancée dès que cette unité d'apprentissage artificiel est définie comme unité dominante.

10. Méthode selon la revendication 8 ou 9, dans laquelle la deuxième unité d'apprentissage artificiel (420) est définie comme unité dominante si un premier intervalle de temps prédéfini pour la première unité d'apprentissage artificiel (410) s'est écoulé dans le temporisateur.
